# EUROPEAN PATENT APPLICATION

(11) **EP 4 535 255 A1**
(43) Date of publication of application: **09.04.2025**
(21) Application number: 23815737.4
(22) Date of filing: 12.05.2023
(51) Int. Cl.: G06Q 10/083, G05D 1/02, G16Y 20/20, G16Y 40/20

(54) **INFORMATION PROCESSING DEVICE, INFORMATION PROCESSING METHOD, AND INFORMATION PROCESSING PROGRAM**

(30) Priority: 31.05.2022 JP 2022088764
(71) Applicant: OMRON Corporation, Kyoto 600-8530 (JP)
(72) Inventor: MINEMOTO, Toshifumi, Kyoto-shi, Kyoto 600-8530 (JP); TASAKI, Hiroshi, Kyoto-shi, Kyoto 600-8530 (JP)
(74) Representative: SONN Patentanwälte GmbH & Co KG
(86) International application number: PCT/JP2023/018008
(87) International publication number: WO 2023/233977

(57) **Abstract**

Enabling efficient identification of a drop in transport performance.

An information processing device includes: a data collection unit that collects collection data including a route plan planed for plural autonomous mobile robots, a job operating state indicating assignment of a robot operation to a job, a movement trajectory of each of the robots, and an operating state of each of the robots; an analysis unit that uses the collection data to compute evaluation index values of a result-system including a job required time, a job utilization ratio, and a robot utilization ratio, and evaluation index values of a cause-system corresponding to each route for the route plan; and a visualization control unit that controls so as to respectively display, on a specific display unit, a display mode enabling comparison of the result-system evaluation index values, and a display mode enabling comparison of the cause-system evaluation index values.

## Description

### Technical Field

The present disclosure relates to an information processing device, an information processing method, and an information processing program.

### Background Art

Hitherto, technology has been proposed to analyze an operating state in a transport management system. For example, Patent Document 1 (Japanese Patent Application Laid-Open (JP-A) No. 2021-009553) discloses technology related to an analysis system capable of executing analysis related to a transport machine. In this technology, a first signal transmitted from a first detector for detecting movement of a transport machine is employed, and an operating state of the transport machine is classified in a work period identified from start information and end information.

### SUMMARY OF INVENTION

### Technical Problem

In technology hitherto, transport log data is collected, and an operating state is classified from the collection data and just presented to a user. This means that, for example, no consideration has been given to identifying a cause for a drop in transport performance.

In consideration of the above circumstances, an object of the technology disclosed herein is to provide an information processing device, an information processing method, and an information processing program that are able to more efficiently identify a drop in transport performance compared to technology hitherto.

### Solution to Problem

In order to achieve the above object, an information processing device according to the present disclosure includes: a data collection unit that collects collection data including a route plan planed for plural autonomous mobile robots, a job operating state indicating assignment of a robot operation to a job, a movement trajectory of each of the robots, and an operating state of each of the robots; an analysis unit that uses the collection data to compute evaluation index values of a result-system including a job required time, a job utilization ratio, and a robot utilization ratio, and evaluation index values of a cause-system corresponding to each route for the route plan; and a visualization control unit that controls so as to respectively display, on a specific display unit, a display mode enabling comparison of the result-system evaluation index values, and a display mode enabling comparison of the cause-system evaluation index values. This thereby enables efficient identification of a drop in transport performance.

The visualization control unit may, according to a selection of display mode input from a user, either display so as to enable comparison of the result-system evaluation index values for a transport system as a whole or for each robot, or displays so as to enable comparison with the cause-system evaluation index values being indicated for each route of the route plan. This thereby enables efficient identification of a drop in transport performance according to an input selection of display mode.

The analysis unit may compute an average movement speed for each route in the route plan as the cause-system evaluation index values, and the visualization control unit may display the cause-system display mode as a graph map so as to enable comparison of the average movement speed for each of the routes. This thereby enables each of the routes to be compared as a graph map.

The visualization control unit may display the average movement speed on the routes as a heat map so as to enable comparison. This thereby enables each of the routes to be visualized as a heat map, and identifiability to be improved.

In relation to the result-system, the job required time may be taken as being a time from a job being assigned to the robot until job completion, the job utilization ratio may be taken as being a proportion of time when a job is being executed out of a time from job issue to job completion, and the robot utilization ratio may be taken as being a proportion of a total time when the robot is job processing with respect to operating time of the robot. The visualization control unit may visualize a status of an operating state of a transport system by a graph comparing the robot utilization ratio and the job utilization ratio in the transport system as a whole, a graph comparing a number of jobs issued to each robot, and a graph comparing the robot utilization ratio and the job utilization ratio for each robot. This thereby enables the result-system evaluation index values to be displayed as results analyzed from many directions.

In order to achieve the above object, an information processing method according to the present disclosure includes, by a computer, collecting collection data including a route plan planed for plural autonomous mobile robots, a job operating state indicating assignment of a robot operation to a job, a movement trajectory of each of the robots, and an operating state of each of the robots, using the collection data to compute evaluation index values of a result-system including a job required time, a job utilization ratio, and a robot utilization ratio, and evaluation index values of a cause-system corresponding to each route for the route plan, and controlling so as to respectively display, on a specific display unit, a display mode enabling comparison of the result-system evaluation index values, and a display mode enabling comparison of the cause-system evaluation index values.

In order to achieve the above object, a program according to the present disclosure causes processing to be executed in a computer. The processing includes collecting collection data including a route plan planed for plural autonomous mobile robots, a job operating state indicating assignment of a robot operation to a job, a movement trajectory of each of the robots, and an operating state of each of the robots, using the collection data to compute evaluation index values of a result-system including a job required time, a job utilization ratio, and a robot utilization ratio, and evaluation index values of a cause-system corresponding to each route for the route plan, and controlling so as to respectively display, on a specific display unit, a display mode enabling comparison of the result-system evaluation index values, and a display mode enabling comparison of the cause-system evaluation index values.

The present disclosure is able to provide an information processing device, an information processing method, and an information processing program that are capable of efficiently identifying a drop in transport performance.

### BRIEF DESCRIPTION OF DRAWINGS

Fig. 1 is a block diagram illustrating a hardware configuration of an information processing device according to an exemplary embodiment.
Fig. 2 is a diagram illustrating an example of a configuration of a system including an information processing device according to the present exemplary embodiment.
Fig. 3 illustrates an example of collection data.
Fig. 4A illustrates an example of a case in which data of movement trajectory collection categories have been saved.
Fig. 4B is an example of a case in which data of operating state collection categories have been saved.
Fig. 4C is an example of a case in which data of job operating state collection categories have been saved.
Fig. 5A is a diagram illustrating robot status state transitions.
Fig. 5B is a diagram illustrating job status state transitions.
Fig. 6 is an example of evaluation index values of a result-system and evaluation index values of a cause-system.
Fig. 7A is a graph in which a robot utilization ratio is compared against a job utilization ratio.
Fig. 7B is a correspondence table in which a robot utilization ratio is compared against a job utilization ratio.
Fig. 8 is a graph illustrating a number of issued jobs to each robot on each day.
Fig. 9 is a graph illustrating a robot utilization ratio of each robot and a job utilization ratio on each day.
Fig. 10 is a band graph illustrating jobs of a robot from issue to completion.
Fig. 11 is a route simulation in which a route plan and actual data of a robot are compared.
Fig. 12 is a diagram illustrating edges of routes.
Fig. 13 illustrates a distance, an average required time, and an average movement speed for each edge.
Fig. 14 is a diagram illustrating edges indicating routes as a heatmap by average movement speed.
Fig. 15 is a flowchart illustrating a flow of information processing by an information processing device.

### DESCRIPTION OF EMBODIMENTS

Description follows regarding an example of an exemplary embodiment of the present disclosure, with reference to the drawings. Note that the same reference numerals will be appended across the drawings to the same or equivalent configuration elements and parts. Moreover, dimensions and proportions in the drawings are exaggerated for ease of explanation, and sometimes differ from actual proportions.

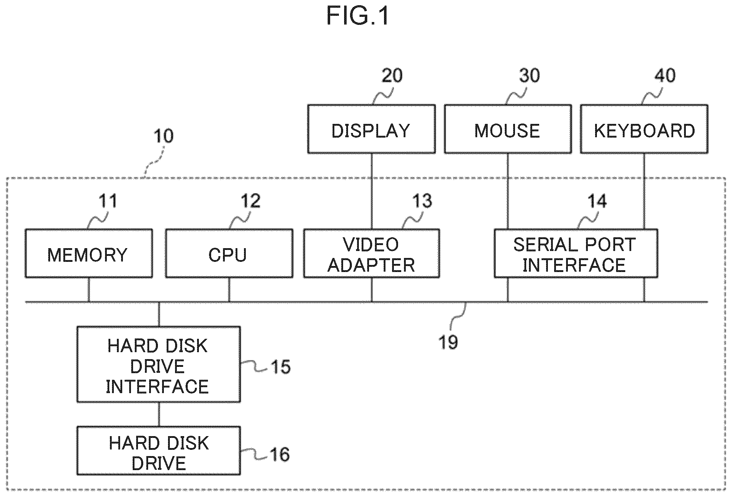

Fig. 1 is a block diagram illustrating a hardware configuration of an information processing device 10 according to the present exemplary embodiment. As illustrated in Fig. 1, the information processing device 10 includes a memory 11, a central processing unit (CPU) 12, a video adapter 13, a serial port interface 14, a hard disk drive interface 15, and a hard disk drive 16. Each configuration is connected together through a bus 19 so as to be capable of communicating with each other.

The memory 11 is, for example, a storage area configured from read only memory (ROM) and random access memory (RAM) etc. ROM stores various programs and various data. RAM serves as a work area to temporarily store programs or data.

The CPU 12 is a central processing unit that executes various programs and controls each section. Namely, the CPU 12 reads a program from the ROM of the memory 11 or from the hard disk drive 16, and executes the program using the RAM of the memory 11 as a work area. The CPU 12 controls each configuration and performs various computational processing according to the program recorded on the ROM of the memory 11 or the hard disk drive 16. In the present exemplary embodiment an information processing program for generating and outputting a specific data structure is stored on the ROM of the memory 11 or the hard disk drive 16.

The video adapter 13 is connected to a display 20. The video adapter 13 outputs, to the display 20, various information for display on the display 20. The display 20 may be various information display devices, such as a liquid crystal display, an organic EL display, or the like.

The serial port interface 14 is connected to a mouse 30 and a keyboard 40. The serial port interface 14 outputs, to the CPU 12, content that has been input by a user operating the mouse 30 and the keyboard 40.

The hard disk drive 16 stores various programs including an operating system and various data. The hard disk drive 16 performs reading and writing of data and programs through the hard disk drive interface 15.

When the information processing program described above is to be executed, the information processing device 10 employs the hardware resources described above to implement various functions. Next, description follows regarding a functional configuration implemented by the information processing device 10.

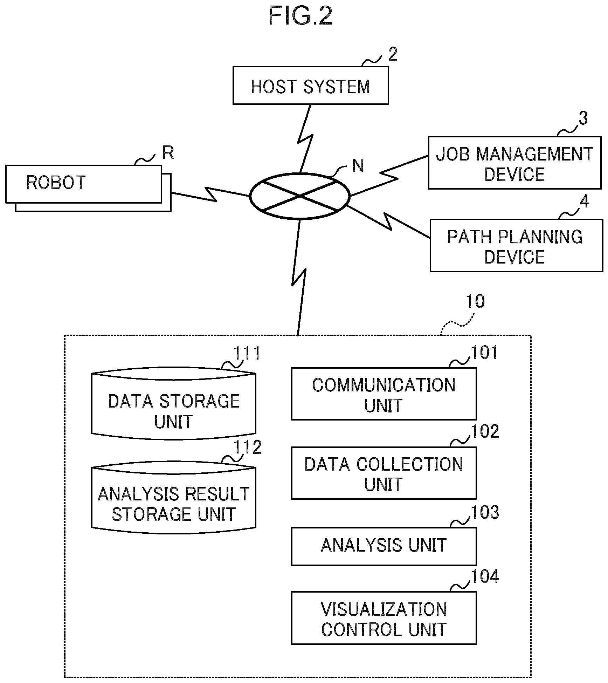

Fig. 2 is a diagram illustrating an example of a configuration of a system including the information processing device 10 according to the present exemplary embodiment. As illustrated in Fig. 2, a host system 2, a job management device 3, a route planning device 4, the information processing device 10, and plural robots R (hereafter numbers are omitted) serving as a control target, are connected together over a network N. The information processing device 10 of the present exemplary embodiment enables efficient identification of a drop in transport performance by visualization of evaluation index values of a result-system and evaluation index values of a cause-system, based on collection data. Note that a robot that is the control target in the present exemplary embodiment is an autonomous mobile robot (AMR). The information processing device 10 receives a command from the host system 2, and controls exchange of data with other systems through the host system 2. The job management device 3 is a device that manages a job operating state, and the route planning device 4 is a device that plans a route plan. The route plan is a plan expressing a movement route of a robot by positions of pass-through points and by pass-through regions, with a predicted arrival time or approach sequence being determined for the movement route. Note that the expressions "evaluation index values of a result-system" and "evaluation index values of a cause-system" are expressed as "result-system" and "cause-system" with the intention of indicating a classification (labeling) of the evaluation index values, and do not indicate that there is a cause-and-effect relationship in these index values.

As illustrated in Fig. 2, the information processing device 10 includes, as functional configuration, a communication unit 101, a data collection unit 102, an analysis unit 103, a visualization control unit 104, a data storage unit 111, and an analysis result storage unit 112. Each of these functional configurations is implemented by the CPU 12 reading and executing an information processing program stored on the ROM of the memory 11 or the hard disk drive 16. The configuration according to the information processing device 10 of the present exemplary embodiment enables a user to rapidly ascertain a cause of a difference between a job plan and actual results in a system by displaying, at the same time, results of transport jobs (hereinafter simply referred to as jobs), and travel information on a transport route of jobs executed in the past. Note that a job in the present exemplary embodiment indicates information related to a task to transport an object, and includes a position for loading a transport object, a transport destination, and time information (scheduled times related to loading and transport).

The communication unit 101 communicates with the host system 2, the job management device 3, the route planning device 4, and the robots, and performs transceiving of various data therewith. In the following description the transceiving of data with the robots is assumed to be through the communication unit 101, and so being through the communication unit 101 is not mentioned every time.

The data collection unit 102 collects collection data including route plans planned for plural robots, job operating states, a movement trajectory for each of the robots, and an operating state of each of the robots. The job operating state indicates, for each job, a status (job status, described later) indicating robot operation assignment to a job, and is information including the robot assigned to a job, and a destination (destination to complete the job). The movement trajectory of the robot is information observed when a robot is moving, and is information of a position of the robot at each time, recorded as a trajectory. Information related to orientation, speed, and the like of the robot during movement is also contained in the movement trajectory and collected. Robot operating state indicates, for each robot, a status (robot status, described later) indicating assignment/processing of a job for a given robot, and is information including a type of job assigned to the robot, and a destination of the robot. The job operating state is collected from the job management device 3, the route plans are collected from the route planning device 4, and the movement trajectories and the operating states are collected from each of the robots. The data collection unit 102 stores collected collection data in the data storage unit 111.

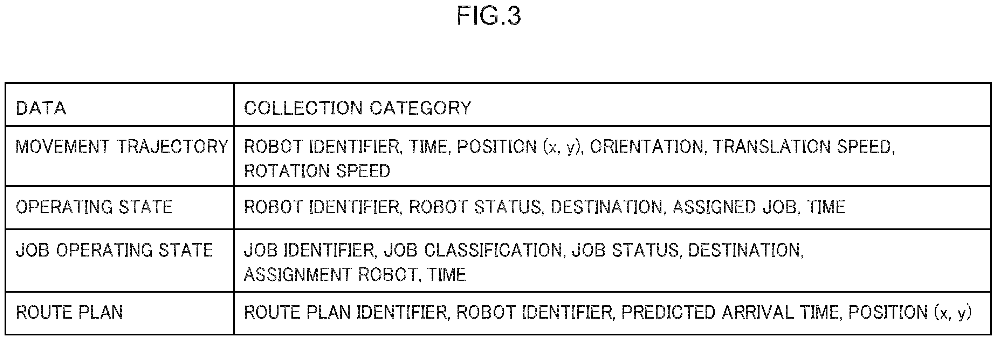

Fig. 3 is an example of the collection data. The data categories of the collection data are movement trajectory, operating state, and job operating state. A robot identifier, time, position (x, y), orientation, translation speed, and rotation speed are collected as collection categories for the movement trajectory data. The robot identifier, robot status, destination, assigned job, and time are collected as collection category for the operating state data. A job identifier, job classification, job status, destination, assignment robot, and time are collected as collection categories for the job operating state data. A route plan identifier, robot identifier, predicted arrival time, pass-through points that are positions (x, y) are collected as collection categories for route plan data.

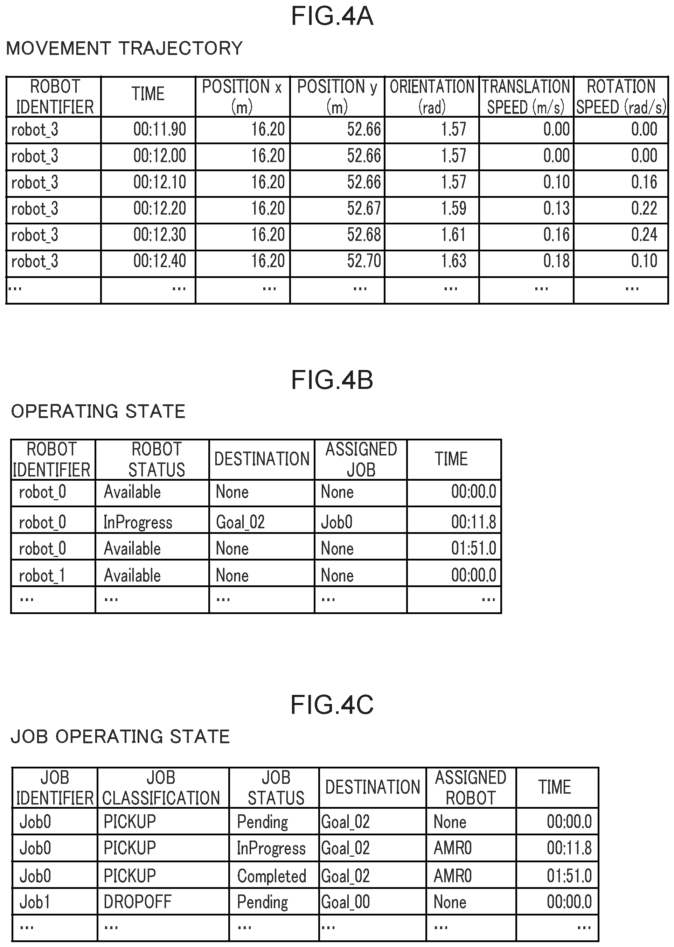

Figs. 4 illustrate detailed examples of data for each of the collection categories. Fig. 4A illustrates an example of a case in which data of movement trajectory collection categories have been saved. Fig. 4B illustrates an example of a case in which data of operating state collection categories have been saved. Fig. 4C illustrates an example of a case in which data of job operating state collection categories have been saved.

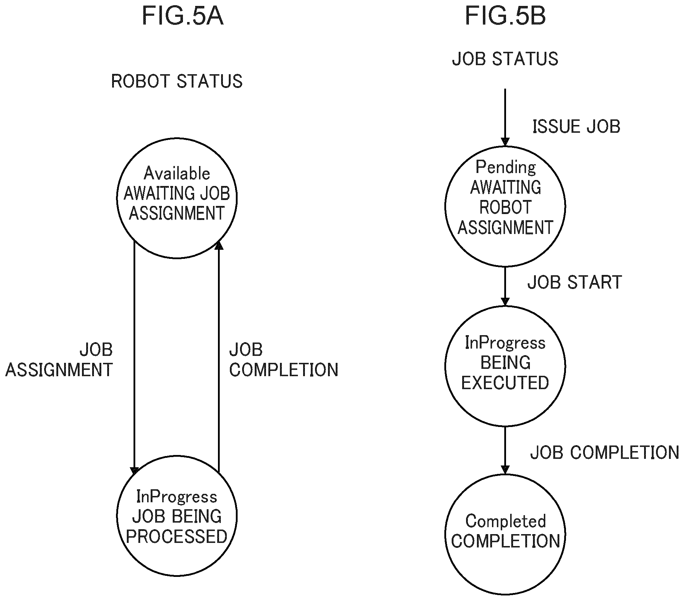

Description follows regarding a robot status and a job status from out of the collection categories. Fig. 5A is a diagram illustrating state transitions of robot status. Fig. 5B is a diagram illustrating state transitions of job status. In the robot status, a state of awaiting job assignment (Available) transitions to a state of job processing (InProgress) when a job has been assigned, and returns from the job processing state to the awaiting job assignment state when the job is completed. The job status becomes a state of awaiting robot assignment (Pending) when a job is issued. Next, transition is made to a state of being executed (InProgress) when the job is started. Transition is made to a state of completed (Complete) when execution of the job is complete. In this manner, the job status focusses on the jobs, and is a status indicating a state of assignment of robots to the jobs. The robot status focusses on the robots, and is a status indicating a state of assignment and execution of jobs in the robots.

The analysis unit 103 uses the collection data to compute result-system evaluation index values and cause-system evaluation index values. The respectively computed result-system evaluation index values and the cause-system evaluation index values are stored in the analysis result storage unit 112. The result-system evaluation index values are, for example, job required time, job utilization ratio, and robot utilization ratio. The cause-system evaluation index values correspond to each of the routes for the route plan and are, for example, computed as an average movement speed for each route in the route plan. Result system is analysis from a macro perspective of the whole system or by each robot unit, and the cause-system is analysis identifying a cause of a drop in transport throughput more specifically at a route level of the route plan.

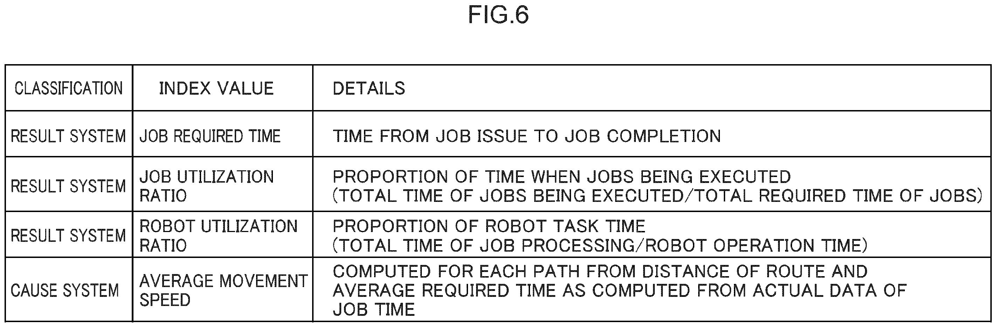

Fig. 6 is an example of the result-system evaluation index values and the cause-system evaluation index values. The job required time is a required time from job issue to job completion in job status. The job utilization ratio is a proportion of time when a job is being executed and is expressed by "total time when jobs are being executed/total required time of jobs" in job status. Note that "jobs are being executed" indicates a state in which a job is being executed in the job status focused on jobs. The robot utilization ratio is a proportion of robot work time and is expressed by "total time of job processing/robot operation time" in robot status. Note that "job processing" indicates a state in which a robot is processing a job in robot status focused on robots. The average movement speed is computed from actual data of job required time, and is computed from an average required time and path distance computed for each path on a route plan map.

The visualization control unit 104 controls so as to respectively display a comparable display mode of the result-system evaluation index values, or a comparable display mode of the cause-system evaluation index values, on the display 20 serving as a display unit. **In** the display control by the visualization control unit 104, input of a selection of display mode is received from a user, the result-system evaluation index values or the cause-system evaluation index values are read out from the analysis result storage unit 112 according to the display mode selection, and the display mode that has been read out is displayed. Moreover, the display mode is controlled so as to be switched according to input from the user and settings. The display unit is not limited to being the display 20 provided to the information processing device 10, and may be a terminal or the like external to the information processing device 10.

An example will be given for the result-system evaluation index value display mode.

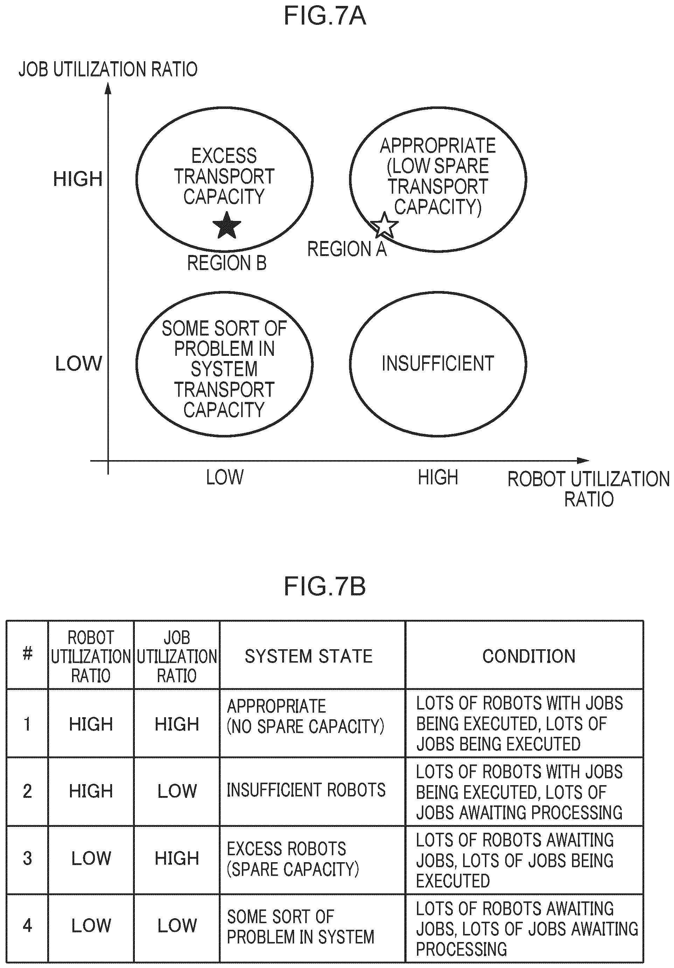

Fig. 7A is a graph comparing robot utilization ratio against job utilization ratio. Fig. 7B is a correspondence table comparing robot utilization ratio against job utilization ratio. 1. cases in which the robot utilization ratio is high and the job utilization ratio is high have low spare transport capacity and are appropriate. 2. cases in which the robot utilization ratio is high and the job utilization ratio is low have insufficient transport capacity, namely insufficient robots. 3. cases in which the robot utilization ratio is low and the job utilization ratio is high have excess transport capacity, namely excess robots. 4. cases in which the robot utilization ratio is low and the job utilization ratio is low have some sort of problem in the system. In the graph of Fig. 7, the region A is appropriate, and the region B has excess transport capacity. In this manner, the visualization control unit 104 compares the robot utilization ratio and the job utilization ratio of the transport system as a whole, namely of each region, using a graph to visualize a status of the operating state of the transport system as a whole. In this case the target of comparison is the robot utilization ratio and the job utilization ratio, and the comparable display mode is a graph. The status of the operating state indicates a state of the transport system by using a graph to compare the respective utilization ratios of the robots and the jobs in the transport system in this manner. The job status focused on the individual jobs is different to the robot status focused on the individual robots.

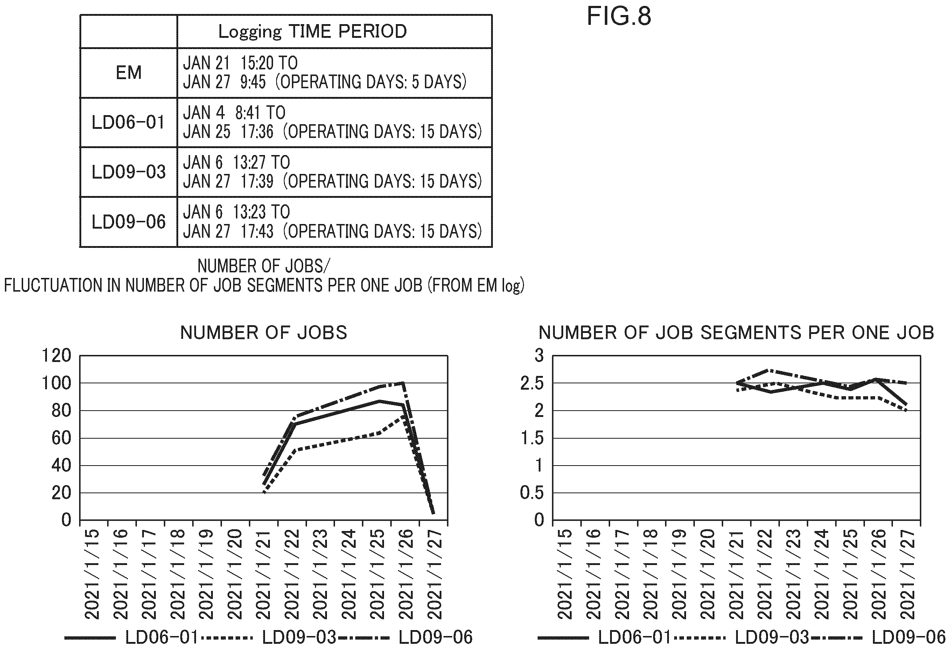

Fig. 8 is a graph (line graph) indicating numbers of jobs issued to each of the robots on each day. In the graph, the date is indicated on the horizontal axis, and the number of jobs issued on the vertical axis. The number of issued jobs on each day of a robot is identified from assigned jobs and times in the collection categories for operating state in the collection data. The visualization control unit 104 accordingly visualizes the number of issued jobs by using a graph to compare the number of issued jobs for each of the robots. In this case the target of comparison is the number of issued jobs for each robot in unit time, and the comparable display mode is a graph.

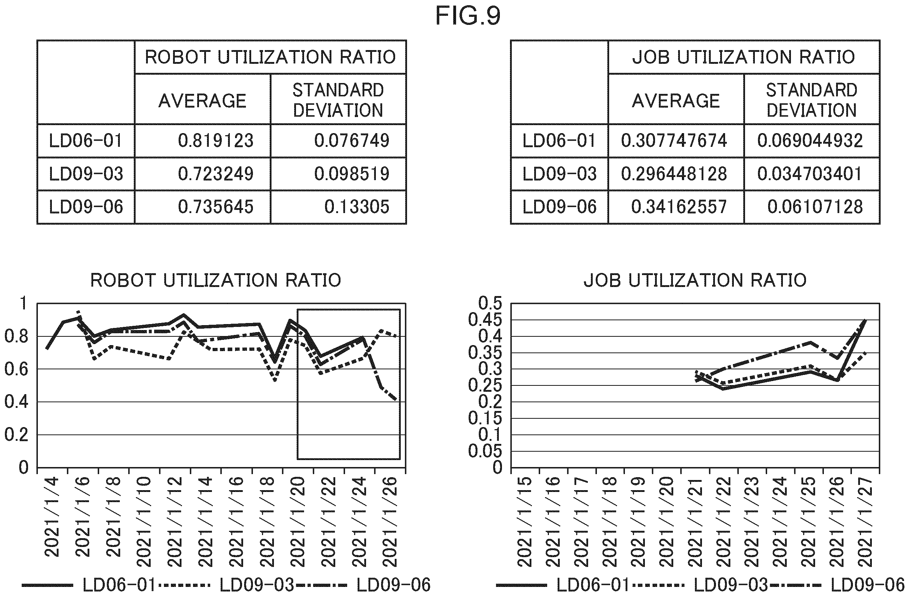

Fig. 9 are graphs (line graphs) indicating the robot utilization ratio and the job utilization ratio of each robot on each day. In the graphs, the date is indicated on the horizontal axis, and the respective utilization ratios are indicated on the vertical axis. In this manner, the visualization control unit 104 accordingly visualizes the robot utilization ratio and the job utilization ratio for each day by the graphs comparing the robot utilization ratio and the job utilization ratio for each robot. The job utilization ratio for each robot is identified from the assigned robot in the collection categories of the job operating state in the collection data. In this case the target of comparison is the robot utilization ratio and the job utilization ratio for each robot in unit time periods, and the comparable display mode is a graph.

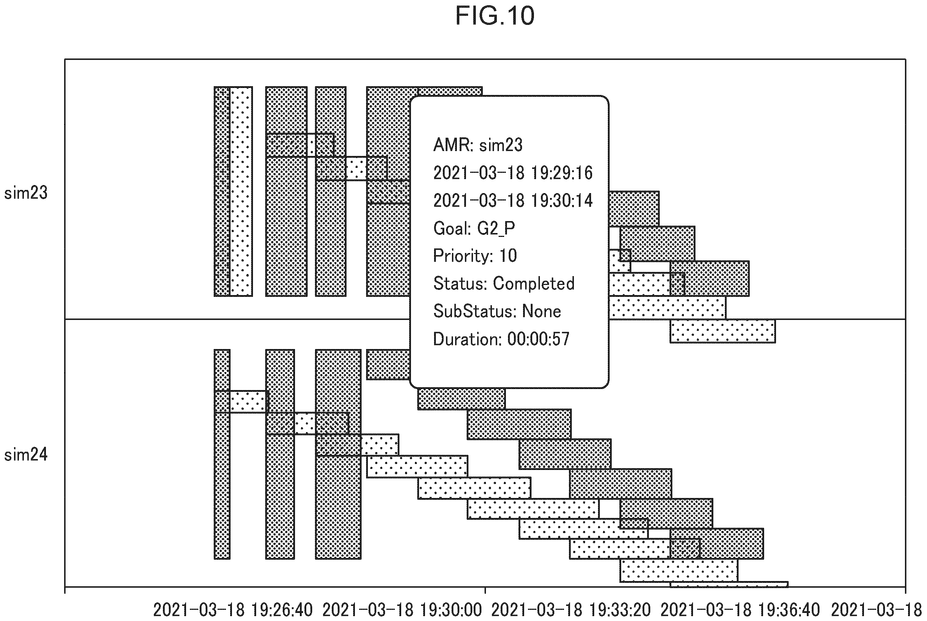

Fig. 10 is a band graph illustrating from job issue to a robot until completion. The band graph stacks the job required time for each job for each of the robots, and uses color coding or the like to enable identification by each job type. This means that the visualization control unit 104 visualizes the job required time for each robot using a graph comparing the jobs of each robot. In this case the target of comparison is job required time for each robot, and the comparable display mode is a band graph. This thereby enables which job took how much time to be ascertained visually, enabling a cause of a drop in transport throughput to be identified.

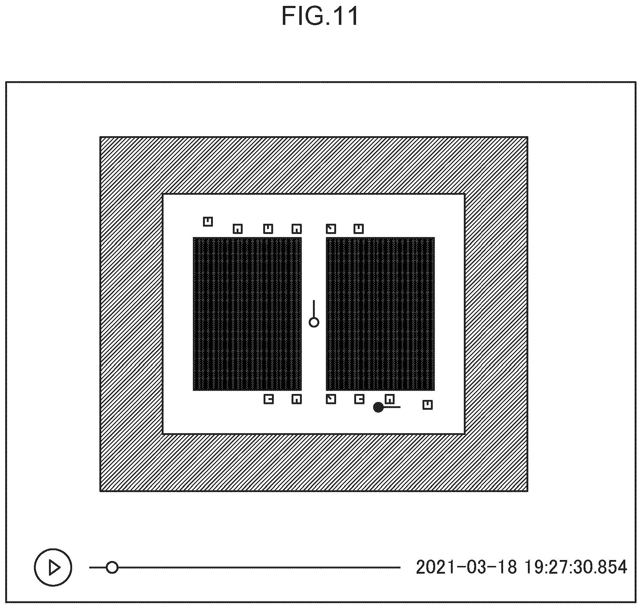

Fig. 11 is a route simulation in which the route plan of a robot and actual data has been compared. This enables visualization so as to enable a comparison of the expected robot position on the route plan against the recorded position, orientation, and speed of the robot at a particular time. The visualization control unit 104 thereby uses route simulation to visualize scheduled and actual results of a route plan of a robot. In this case, the target of comparison is the scheduled and actual results of the route plan, and the comparable display mode is the route simulation. This thereby enables the ground point at which movement was unable to follow the plan to be ascertained visually, enabling the cause of a drop in transport throughput to be identified. As illustrated in the above examples of the display mode of the result-system evaluation index values, the visualization control unit 104 displays the result-system evaluation index values as a comparable graph or route simulation for the transport system overall or for each robot.

Example will now be given of a display mode of the cause-system evaluation index values.

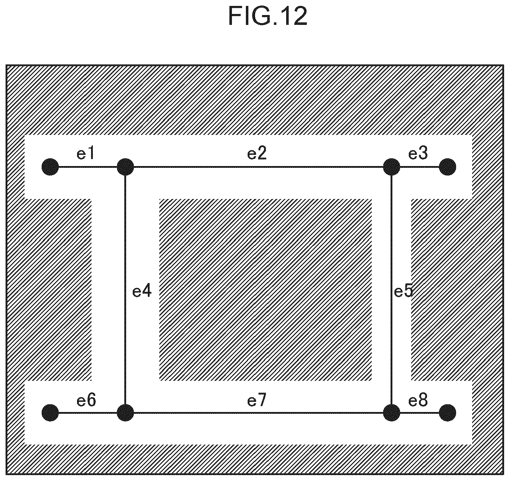

Fig. 12 is a diagram in which a route is indicated by edges. Edges are routes connecting nodes, wherein each of the nodes is a start ground point, each pass-through point, or a goal ground point of a route plan. Fig. 12 illustrates edges e1 to e8. A distance from a position of the start point to a position of the end point is allocated across the edges.

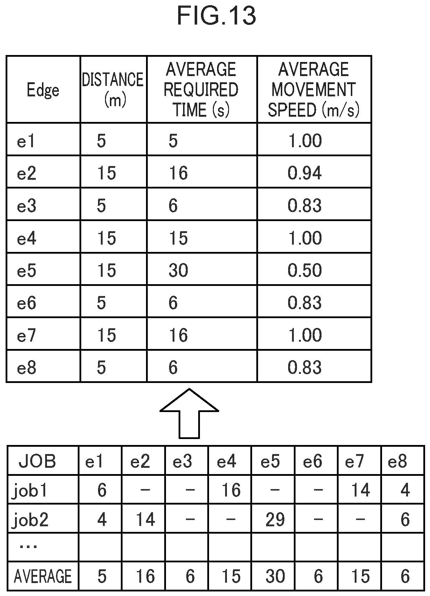

Fig. 13 lists a distance, an average required time, and an average movement speed for each edge. The average required time for each edge is computed from travel actual results for each robot (movement trajectory, operating state, and job operating state of collection data), and the average movement speed for each edge is computed therefrom. The average required time is found by computing, for each edge, a job required time of each job for that edge, and then averaging. The job required time for each job for the edge is found by dividing the job required time for the given job across the edges, and may, for example, be found by assigning job operating states to positions of edges (from the start point), and referencing a movement trajectory for a robot.

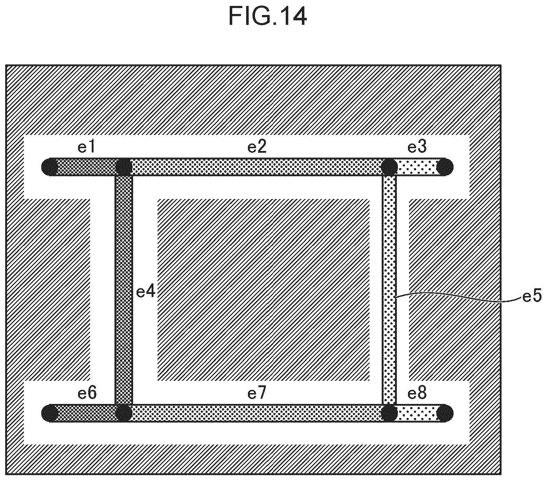

Fig. 14 is a diagram illustrating a heat map of edges indicating routes produced using average movement speeds. Fig. 14 is an example of a case in which a slow average movement speed of route e5 is indicated by a heat color. The visualization control unit 104 accordingly performs visualization with edges indicating a route expressed by a heat map with average movement speeds. In this case, the target of comparison is the average movement speed for each route, and the comparable display mode is each route expressed as a heat map. Note that the heat map is merely an example, and there is no limitation to a mode in which each of the routes of a route plan is indicated with the average movement speed for each of the routes comparably displayed. For example, a graph map may be employed so as to display the average movement speeds by numerical values appended to the edges, and by thicknesses of the edges. Visualization with the evaluation index values appended to a graph map in this manner enables each of the routes on the graph map to be compared and routes that are bottlenecks to be ascertained.

Note that using the average movement speed of each of the routes is merely an example of a cause-system evaluation index value and, for example, an average number of jobs, average robot utilization ratio, average job utilization ratio, or the like may be employed for each route.

Next, description follows regarding operation of the information processing device 10.

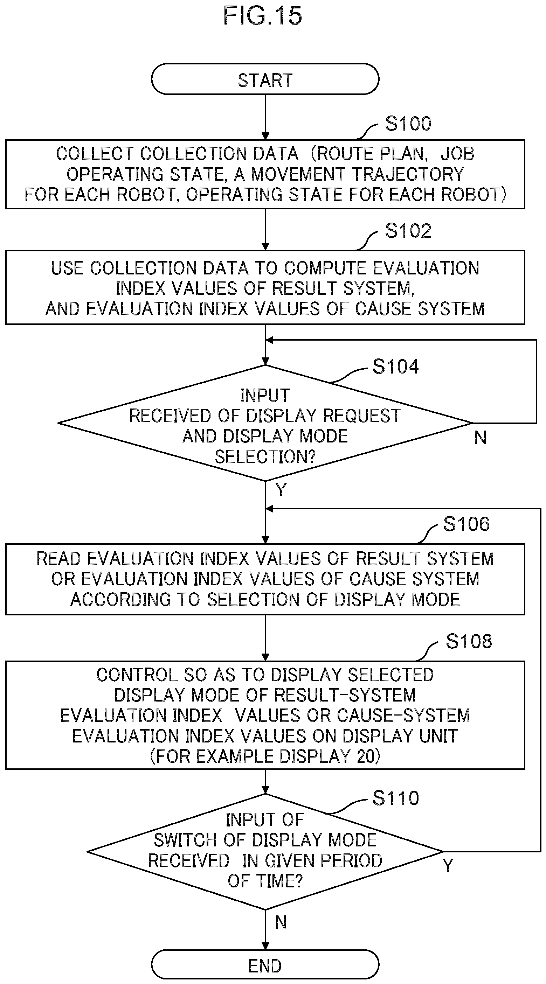

Fig. 15 is a flowchart illustrating a flow of information processing by the information processing device 10. A processing routine of information processing is executed by the CPU 12 reading the information processing program stored on the ROM of the memory 11 or the hard disk drive 16, and expanding and executing the information processing program in the RAM of the memory 11.

At step S100, the CPU 12 collects collection data including route plans that have been planned for plural robots, job operating states, a movement trajectory for each of the robots, and an operating state for each of the robots.

At step S102, the CPU 12 employs the collection data to compute the result-system evaluation index values and the cause-system evaluation index values.

At step S104, the CPU 12 determines whether or not input of a selection for the display request and the display mode has been received from a user. Processing transitions to step S106 when input has been received. The present step is repeated when no input has been received, and standby is adopted until input is received. The processing routine is ended when there is no input for a given period of time, and the processing routine is repeated from step S100.

At step S106, the CPU 12 reads the result-system evaluation index values or the cause-system evaluation index values from the analysis result storage unit 112 according to the display mode that was selected.

At step S108, the CPU 12 controls the display unit (for example the display 20) so as to display the selected display mode of the result-system evaluation index values or the cause-system evaluation index values.

At step S110, the CPU 12 determines whether or not input of a switch of display mode has been received from the user during a given period of time. Processing returns to step S106 when input of a switch of display mode has been received. The processing routine is ended when no input of a switch of display mode has been received. Control is accordingly performed so as to switch display mode according to input of the result-system evaluation index value or the cause-system evaluation index value display mode.

The information processing device 10 according to the present exemplary embodiment includes such configuration and so is able to efficiently identify a drop in transport performance. The information processing device 10 according to the present exemplary embodiment visualizes the result-system evaluation index values and the cause-system evaluation index values based on the collection data, and so is able to more efficiently identify a drop in transport performance compared to conventional technology.

Note that the information processing executed in the above exemplary embodiment by a CPU reading software (a program), may be executed by various processors other than a CPU. Such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the information processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although in the above exemplary embodiment an embodiment has been described in which the information processing program is pre-stored (installed) on a ROM or storage, there is no limitation thereto. The program may be provided in a format recorded on a non-transitory recording medium such as a compact disk read only memory (CD-ROM), digital versatile disk read only memory (DVD-ROM), universal serial bus (USB) memory, or the like. Moreover, the program according may be provided in a format downloadable from an external device over a network.

The entire content of the disclosure of Japanese Patent Application No. 2022-088764 filed on May 31, 2022 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

### Explanation of Reference Numerals

10 information processing device
102 data collection unit
103 analysis unit
104 visualization control unit

## Claims

1. An information processing device comprising:
a data collection unit that collects collection data including a route plan planned for a plurality of autonomous mobile robots, a job operating state indicating assignment of a robot operation to a job, a movement trajectory of each of the robots, and an operating state of each of the robots;
an analysis unit that uses the collection data to compute evaluation index values of a result-system including a job required time, a job utilization ratio, and a robot utilization ratio, and evaluation index values of a cause-system corresponding to each route for the route plan; and
a visualization control unit that controls so as to respectively display, on a specific display unit, a display mode enabling comparison of the result-system evaluation index values, and a display mode enabling comparison of the cause-system evaluation index values.

2. The information processing device of claim 1, wherein, according to a selection of display mode input from a user, the visualization control unit either displays so as to enable comparison of the result-system evaluation index values for a transport system as a whole or for each robot, or displays so as to enable comparison with the cause-system evaluation index values being indicated for each route of the route plan.

3. The information processing device of claim 1, wherein:
the analysis unit computes an average movement speed for each route in the route plan as the cause-system evaluation index values; and
the visualization control unit displays the cause-system display mode as a graph map so as to enable comparison of the average movement speed for each of the routes.

4. The information processing device of claim 3, wherein the visualization control unit displays the average movement speed on the routes as a heat map so as to enable comparison.

5. The information processing device of claim 1, wherein:
in relation to the result-system,
the job required time is taken as being a time from a job being assigned to the robot until job completion;
the job utilization ratio is taken as being a proportion of time when a job is being executed out of a time from job issue to job completion; and
the robot utilization ratio is taken as being a proportion of a total time when the robot is job processing with respect to operating time of the robot; and
the visualization control unit visualizes a status of an operating state of a transport system by a graph comparing the robot utilization ratio and the job utilization ratio in the transport system as a whole, a graph comparing a number of jobs issued to each robot, and a graph comparing the robot utilization ratio and the job utilization ratio for each robot.

6. An information processing method executed by a computer and comprising:
collecting collection data including a route plan planned for a plurality of autonomous mobile robots, a job operating state indicating assignment of a robot operation to a job, a movement trajectory of each of the robots, and an operating state of each of the robots;
using the collection data to compute evaluation index values of a result-system including a job required time, a job utilization ratio, and a robot utilization ratio, and evaluation index values of a cause-system corresponding to each route for the route plan; and
controlling so as to respectively display, on a specific display unit, a display mode enabling comparison of the result-system evaluation index values, and a display mode enabling comparison of the cause-system evaluation index values.

7. An information processing program that is executable by a computer to perform processing, the processing comprising:
collecting collection data including a route plan planned for a plurality of autonomous mobile robots, a job operating state indicating assignment of a robot operation to a job, a movement trajectory of each of the robots, and an operating state of each of the robots;
using the collection data to compute evaluation index values of a result-system including a job required time, a job utilization ratio, and a robot utilization ratio, and evaluation index values of a cause-system corresponding to each route for the route plan; and
controlling so as to respectively display, on a specific display unit, a display mode enabling comparison of the result-system evaluation index values, and a display mode enabling comparison of the cause-system evaluation index values.
